(19) Europäisches Patentamt / European Patent Office / Office européen des brevets

(11) **EP 2 401 719 B1**

(12) **FASCICULE DE BREVET EUROPEEN**

(45) Date de publication et mention
de la délivrance du brevet:
**16.01.2013   Bulletin 2013/03**

(21) Numéro de dépôt: **10708318.0**

(22) Date de dépôt: **10.02.2010**

(51) Int Cl.:
***G06T 7/00*** *(2006.01)*

(86) Numéro de dépôt international:
**PCT/FR2010/050218**

(87) Numéro de publication internationale:
**WO 2010/097534 (02.09.2010 Gazette 2010/35)**

(54) **MÉTHODES DE SEGMENTATION D'IMAGES ET DE DÉTECTION DE STRUCTURES PARTICULIÈRES**

VERFAHREN ZUM SEGMENTIEREN VON BILDERN UND DETEKTIEREN SPEZIFISCHER STRUKTUREN

METHODS FOR SEGMENTING IMAGES AND DETECTING SPECIFIC STRUCTURES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **27.02.2009  FR 0951289**

(43) Date de publication de la demande:
**04.01.2012   Bulletin 2012/01**

(73) Titulaire: **Commissariat à l'Énergie Atomique et aux Énergies Alternatives
75015 Paris (FR)**

(72) Inventeurs:
• **MAROY, Renaud
  75015 Paris (FR)**
• **TREBOSSEN, Régine
  F-75013 Paris (FR)**
• **ZANOTTI FREGONARA, Paolo
  Bethesda
  MD 20817 (US)**

(74) Mandataire: **Domenego, Bertrand
  Cabinet Lavoix
  2, place d'Estienne d'Orves
  75441 Paris Cedex 09 (FR)**

(56) Documents cités:
• **CATES J E ET AL: "Case study: an evaluation of user-assisted hierarchical watershed segmentation" MEDICAL IMAGE ANALYSIS, OXFORD UNIVERSITY PRESS, OXOFRD, GB, vol. 9, no. 6, 1 décembre 2005 (2005-12-01), pages 566-578, XP025369245 ISSN: 1361-8415 [extrait le 2005-12-01]**
• **MAROY R ET AL: "Segmentation of Rodent Whole-Body Dynamic PET Images: An Unsupervised Method Based on Voxel Dynamics" IEEE TRANSACTIONS ON MEDICAL IMAGING, IEEE SERVICE CENTER, PISCATAWAY, NJ, US, vol. 27, no. 3, 1 mars 2008 (2008-03-01), pages 342-354, XP011202052 ISSN: 0278-0062**
• **FENG D ET AL: "Graph-Based Mumford-Shah Segmentation of Dynamic PET With Application to Input Function Estimation" IEEE TRANSACTIONS ON NUCLEAR SCIENCE, IEEE SERVICE CENTER, NEW YORK, NY, US, vol. 52, no. 1, 1 février 2005 (2005-02-01), pages 79-89, XP011129884 ISSN: 0018-9499**

**Description**

La présente invention concerne une méthode de segmentation d'images, une méthode de détection de structures particulières, ainsi qu'un dispositif informatique associé.

L'invention s'applique dans le domaine de l'imagerie médicale et plus particulièrement au domaine de la tomographie par émission de positons (TEP).

De nos jours, l'imagerie médicale est utilisée par les médecins afin d'établir un diagnostic, en oncologie par exemple, ou en tant que traitement thérapeutique en radiothérapie. Les dispositifs d'imagerie, par exemple scanner X (CT pour Computed Tomography en anglais), par résonance magnétique (IRM) ou TEP, produisent des images fournissant des informations anatomiques ou fonctionnelles. Les images subissent des algorithmes de traitement d'images afin d'aider le médecin dans l'établissement de son diagnostic. L'un des traitements d'images consiste en une opération de segmentation qui a pour but de rassembler des pixels de l'image entre eux suivant des critères prédéfinis. Les pixels sont ainsi regroupés en régions qui constituent une partition de l'image, par exemple pour visualiser les organes ou des structures particulières telles que des tumeurs.

Le document FR2886433 décrit une méthode de segmentation d'une image ou séquence d'images tridimensionnelles comprenant, dans l'ordre d'exécution de la méthode, les étapes suivantes :

- une division de l'image ou séquence d'images en une pluralité de régions ; puis
- une fusion hiérarchique des régions issues de la division afin d'obtenir l'image ou séquence d'images tridimensionnelles partitionnée en régions d'intérêt.

Cependant cette méthode de segmentation n'est pas suffisamment efficace pour segmenter des petites structures telles que des tumeurs. En effet, la concentration radioactive du traceur est sous-estimée à l'intérieur de ces petites structures. Cet effet est couramment appelé effet de volume partiel et est la conséquence de la résolution spatiale limitée et de l'échantillonnage choisi.

J. E. Cates et al., "Case study: an evaluation of user-assisted hierarchical watershed segmentation", Medical Image Analysis, Oxford University Press, Oxford, GB, vol. 9, no. 6, 1 décembre 2005, pages 566 - 578, ISSN 1361-8415 décrit une segmentation hiérarchique tridimensionnelle par lignes de partage des eaux sur des données MRI. Le système comprend un cadre d'utilisation graphique pour comparer des segmentations automatiques avec des segmentations manuelles.

Le but de l'invention est de fournir un outil et une méthode de dessin automatique des tumeurs permettant de délimiter efficacement les zones tumorales, mêmes de petites tailles, des zones saines. L'invention permettra de faciliter la tâche de traitement des images opérée par un médecin nucléaire ou radiothérapeute et ainsi d'améliorer son efficacité de diagnostic et/ou de l'entraîner s'il est débutant sur des données simulées ou réelles. L'invention n'est pas limitée au diagnostic chez l'homme, elle est également applicable chez l'animal.

A cet effet, l'invention a pour objet une méthode de segmentation d'une image ou séquence d'images tridimensionnelles du type précité, caractérisée en ce que l'étape de fusion hiérarchique comprend une étape de fusion utilisant des critères de forme et de taille des régions pour ne pas fusionner les régions de petite taille.

Suivant des modes particuliers de réalisation, la méthode de segmentation d'une image ou séquence d'images tridimensionnelles comporte l'une ou plusieurs des caractéristiques suivantes :

- l'étape de fusion hiérarchique comprend en outre une étape de fusion des régions sans critères de forme et de taille des régions destinée à fusionner les régions en régions d'intérêt, sans distinction de forme ou de taille ;
- l'étape de fusion des régions sans critères de forme et de taille des régions est réalisée après l'étape de fusion utilisant des critères de forme et de taille des régions et à partir de l'image ou séquence d'images résultant de l'exécution de cette étape de fusion ;
- l'étape de fusion hiérarchique est une double fusion comprenant en outre une étape de fusion sans critères de forme et de taille des régions à partir de l'image ou séquence d'images divisée en régions résultant de l'exécution de l'étape de division ;
- la ou chaque étape de fusion des régions sans critères de forme et de taille des régions comprend une étape de calcul d'un coût de fusion, entre une région $R_1$ et une région $R_2$, défini par :

$$\text{Coût}(R_1, R_2) = H(R_1, R_2)$$

H étant une fonction dépendant des variations du signal dans les régions $R_1$ et $R_2$ puis une étape de fusion des images selon une règle du coût de fusion minimal ;

- l'étape de fusion utilisant des critères de forme et de taille des régions pour ne pas fusionner les régions de petite taille comprend une étape de calcul d'un coût de fusion, entre une région $R_1$ et une région $R_2$, défini par :

$$\text{Coût}(R_1, R_2) = \frac{H(R_1, R_2)}{F(R_1)F(R_2)G(R_1)G(R_2)}$$

H étant la fonction dépendant des variations du signal dans les régions $R_1$ et $R_2$, F et G étant des fonctions dépendant respectivement de la forme et de la taille de la région ; puis une étape de fusion des images selon une règle du coût de fusion minimal ;
- l'image ou séquence d'images comprend une pluralité de voxels et des mesures pour chacun des voxels d'une variable de l'image ou séquence d'images, au cours de n intervalles de temps (n ≥ 1) et la méthode de segmentation comprend, avant l'étape de division en régions, les étapes suivantes destinées à définir le nombre de régions séparées au cours de l'étape de division :
- un calcul d'une carte de variance spatiale locale de ladite variable mesurée de l'image ou séquence d'images, au cours du temps et pour chaque voxel de l'image ou séquence d'images ; puis
- une extraction automatique d'au moins un point de coeur de l'image ou séquence d'images, les points de coeur étant les pixels des minima de la carte de variance spatiale locale de ladite variable ; le nombre de points de coeur extraits au cours de cette étape définissant le nombre de régions de l'image ou séquence d'images divisées à la fin de l'étape de division ;
- la méthode comprend après l'étape d'extraction automatique des points de coeur et avant l'étape de division, une étape d'extraction d'une évolution temporelle de ladite variable du ou de chaque point de coeur et une estimation des paramètres globaux du bruit, destinée à calculer le coût de fusion lors de l'étape de fusion hiérarchique ;
- chaque région issue de l'étape de division de l'image ou séquence d'images correspond à un point de coeur résultant de l'étape d'extraction automatique des points de coeur de l'image ou séquence d'images et chaque région regroupe les pixels ayant une évolution temporelle de ladite variable similaire.
- la méthode comprend une étape d'exclusion d'un fond de l'image ou séquence d'images comprenant une étape de définition d'un seuil de l'image ou séquence d'images destinée à extraire un masque de l'objet à partir d'une image acquise en transmission de l'objet afin d'appliquer la méthode de segmentation à l'objet uniquement ;
- l'étape d'exclusion du fond comprend une étape de lissage pour maximiser un contraste de l'image dans les régions d'intérêt de petite taille avant l'étape de définition d'un seuil ;
- ladite image ou séquence d'images est préalablement acquise par un dispositif d'imagerie selon la technique de tomographie par émission de positons ;
- l'image ou séquence d'images d'un objet est une image ou séquence d'images d'un organisme entier, ladite méthode de segmentation segmentant l'organisme selon une partition en pharmaco-organes ;
- l'organisme est animé de mouvements physiologiques soit de type périodique, dont la période est réduite en comparaison de la durée d'acquisition de l'image ou chacune des images de la séquence, soit de type non périodique ; et
- ladite variable représente la concentration radioactive en un instant donné d'au moins un principe actif marqué et injecté dans l'organisme, l'ensemble des voxels à l'intérieur de chaque pharmaco-organe présentant des cinétiques pharmacologiques de répartition dudit principe actif qui sont similaires.

L'invention a également pour objet une méthode de détection d'au moins une structure particulière sur une image ou séquence d'images, caractérisée en ce que qu'elle comprend les étapes suivantes :

- une segmentation de l'image ou séquence d'images destinée à la segmenter en une pluralité de régions d'intérêt ; la segmentation de l'image ou séquence d'images étant le résultat de l'exécution d'une méthode de segmentation d'une image ou séquence d'images tridimensionnelles d'un objet telle que décrite ci-dessus ;
- un calcul d'une pluralité de critères pour discriminer les structures particulières à détecter pour chaque région d'intérêt ;
- un calcul d'une fonction d'identification dépendant de la pluralité de critères pour chaque région d'intérêt, la fonction d'identification étant une fonction paramétrique dépendant d'un jeu de paramètres ;

et la pluralité de critères comprend un critère de forme des régions d'intérêt afin de discriminer les structures particulières parmi les régions d'intérêt.

Suivant des modes particuliers de réalisation, la méthode de détection d'au moins une tumeur sur une image ou séquence d'images segmentées en une pluralité de régions d'intérêt comporte l'une ou plusieurs des caractéristiques suivantes :

- la segmentation de l'image ou séquence d'images en une pluralité de régions d'intérêt est le résultat de l'exécution d'une méthode de segmentation d'une image ou séquence d'images tridimensionnelles d'un objet ayant une étape de fusion sans critères de forme et de taille des régions après une étape de fusion avec critère de forme et de taille telles que décrites ci-dessus.
- la méthode comprend une étape de classement des régions d'intérêt selon une probabilité d'être une structure particulière à détecter à partir du calcul de la fonction d'identification.

L'invention a également pour objet un dispositif informatique de segmentation d'une image ou séquence d'images tridimensionnelles d'un objet acquise par un dispositif d'imagerie comprenant :

- des moyens de division de l'image ou séquence d'images en une pluralité de régions ;
- des moyens de fusion hiérarchique des régions issues de la division afin d'obtenir l'image ou séquence d'images tridimensionnelles partitionnée en régions d'intérêt ;

caractérisé en ce que les moyens de fusion hiérarchique comprennent des moyens de fusion utilisant des critères de forme et de taille des régions pour ne pas fusionner les régions de petite taille.

L'invention a également pour objet un dispositif informatique de détection d'au moins une structure particulière sur une image ou séquence d'images, caractérisé en ce que qu'il comprend :

- un dispositif de segmentation de l'image ou séquence d'images tel que décrit ci-dessus destiné à la segmenter en une pluralité de régions d'intérêt ;
- des moyens de détection comprenant :
- des moyens de calcul d'une pluralité de critères pour discriminer les structures particulières à détecter pour chaque région d'intérêt ; la pluralité de critères comprenant un critère de forme des régions d'intérêt afin de discriminer les structures particulières parmi les régions d'intérêt ;
- des moyens de calcul d'une fonction d'identification dépendant de la pluralité de critères pour chaque région d'intérêt, la fonction d'identification étant une fonction paramétrique dépendant d'un jeu de paramètres.

Suivant des modes particuliers de réalisation, le dispositif informatique de traitement d'une image ou séquence d'images tridimensionnelles d'un objet acquises par un dispositif d'imagerie comporte l'une ou plusieurs des caractéristiques suivantes :

- le dispositif comporte :
- des moyens d'adaptation automatique d'une palette de couleurs pour une région d'intérêt de l'image ou séquence d'images désignée par un opérateur ; les moyens d'adaptation automatique d'une palette de couleurs étant destinés à aider l'opérateur à établir un diagnostic ; et
- une interface homme-machine comprenant des moyens d'affichage destinés à afficher des informations générées par les moyens d'adaptation automatique de la palette de couleurs ;
- l'interface homme-machine comprend des moyens d'affichage des structures détectées et classées par les moyens de détection ;
- le dispositif comprend des moyens de quantification de paramètres diagnostics dans une structure désignée par l'opérateur, et des moyens de comparaison des paramètres diagnostics entre au moins deux images ; et l'interface homme-machine comprend des moyens d'affichage des paramètres diagnostics et d'un résultat de la comparaison exécutée par les moyens de comparaison.

L'invention sera mieux comprise à la lecture de la description qui va suivre, donnée uniquement à titre d'exemple, et faite en se référant aux dessins annexés, sur lesquels :

- la figure 1 est une vue schématique d'une installation d'acquisition et de traitement d'images selon l'invention,
- la figure 2 est un schéma bloc illustrant la méthode de segmentation d'une image ou séquence d'images tridimensionnelles selon l'invention,
- la figure 3 est une représentation des images successives obtenues lors de l'exécution de la méthode de segmentation d'une image ou séquence d'images tridimensionnelles d'un rongeur selon l'invention, et
- la figure 4 est un schéma bloc illustrant la méthode de détection d'au moins une structure particulière sur une image ou séquence d'images selon l'invention.

Cette invention s'applique à tout type d'images, par exemple médicales ou plus spécifiquement d'oncologie.

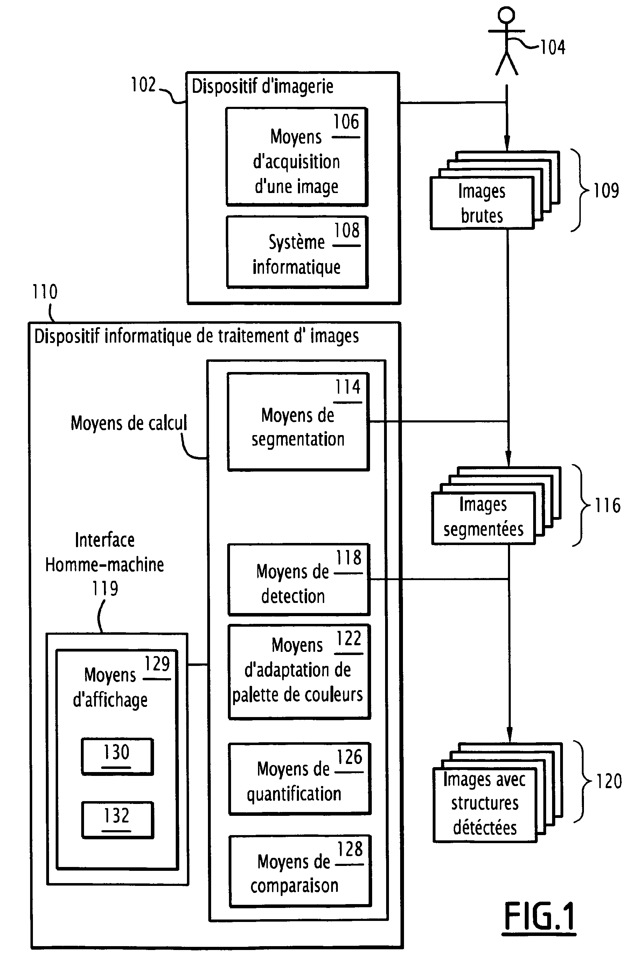

La figure 1 présente une installation d'acquisition et de traitement d'images.

Cette installation permet à un médecin d'établir un diagnostic pour un patient à partir d'une image ou séquence d'images médicale du sujet.

Cette image ou séquence d'images médicale résulte de l'utilisation d'un dispositif d'imagerie 102 sur un objet ou sujet 104. Ce dispositif d'imagerie 102 comprend des moyens d'acquisition 106 et un système informatique 108. Ce système informatique 108 est destiné à piloter les moyens d'acquisition 106 et à reconstituer les images à l'aide d'un algorithme de reconstruction.

Le dispositif d'imagerie 102 est, par exemple, un scanner X, un système d'imagerie par résonance magnétique (IRM) ou un système d'imagerie par émission de positons (TEP).

Dans le cas de l'imagerie TEP, les algorithmes reconstruisent, pour une partie ou pour la totalité du corps du sujet 104, la répartition d'un traceur radioactif sous la forme d'une image bidimensionnelle ou tridimensionnelle. Les images ainsi obtenues sont dites " brutes " 109 car elles n'ont subi aucun traitement mis à part leur reconstruction par un algorithme de reconstruction d'images.

Ensuite afin de faciliter le diagnostic du médecin, les images « brutes » 109 sont traitées par différents algorithmes intégrés dans un dispositif informatique 110 destiné par exemple à segmenter l'image ou séquence d'images 109, ou à détecter des structures particulières dans l'image, telles que des tumeurs.

Pour cela, le dispositif informatique 110 comprend des moyens de segmentation 114 d'une image, exécutant par l'intermédiaire d'un processeur, une méthode de segmentation, selon le procédé selon l'invention qui sera décrit par la suite, destinée à partitionner l'image ou séquence d'images brutes 102 en une pluralité de régions d'intérêt, par exemple pour les organes, formant une image ou séquence d'images segmentée 116.

En outre, le dispositif informatique 110 comporte des moyens de détection 118 d'au moins une structure particulière, par exemple une tumeur, sur une image ou séquence d'images segmentée 116. Ces moyens de détection exécutent par l'intermédiaire du processeur une méthode de détection selon l'invention, qui sera décrite ultérieurement.

L'image ou séquence d'images, préalablement traitée par les moyens de segmentation 114, est ensuite analysée par les moyens de détection 118, qui détectent les structures particulières telles que les tumeurs dans l'image ou la séquence d'images segmentée 116. Le résultat de cette analyse forme une image ou séquence d'images dite « analysée » 120, qui met en évidence les structures particulières détectées.

Afin de visualiser l'image ou séquence d'images brute 109, segmentée 116 ou analysée 120, une interface homme-machine 119, comportant des moyens d'affichage, par exemple un écran, est intégrée au dispositif informatique 110.

De plus, pour que l'opérateur puisse interagir avec le dispositif informatique 110, son interface homme-machine 119 comporte des moyens d'entrée d'informations relatives au traitement d'une image ou séquence d'images 109 ou 116, destinés à entrer des informations pour réaliser le traitement de l'image ou séquence d'images. Les moyens d'entrée sont par exemple un clavier et/ou un dispositif de déplacement d'un curseur virtuel visualisé sur les moyens d'affichage,

Enfin, après avoir réalisé les traitements sur l'image ou séquence d'images, l'opérateur peut afficher l'image ou séquence d'images segmentée 116 ou « analysée » grâce aux moyens d'affichage de l'interface homme-machine 119. En plus de la visualisation de l'image TEP selon les trois directions cardinales (axiale-sagittale-coronale), le dispositif informatique 110 aide le médecin afin d'améliorer l'efficacité et la rapidité de son diagnostic en comprenant des moyens d'adaptation automatique 122 d'une palette de couleurs, de quantification 126 de paramètres diagnostics et des moyens de comparaison 128 de ces paramètres entre deux images 120, et des moyens d'affichage 130, 132, intégrés à l'interface homme-machine 119, des informations engendrées par ces moyens 122, 126 et 128, dont le fonctionnement est décrit par la suite.

Généralement le choix d'une palette de couleurs de l'image prend du temps au médecin nucléaire, et une mauvaise palette risque de faire manquer des tumeurs. Sur une image TEP, la palette de couleurs est constituée d'une pluralité de couleurs, par exemple du blanc au noir, correspondant respectivement aux niveaux minimal $P_{min}$ et maximal $P_{max}$ de la palette et associées à la valeur minimale $I_{min}$ et maximale $I_{max}$ de l'intensité de l'image. Chaque couleur correspond à une gamme de valeurs de l'intensité des pixels de l'image ou séquence d'images.

Afin d'analyser lui-même ou de vérifier l'analyse par les moyens de détection 118 d'une image concernant une structure particulière, par exemple une tumeur, le médecin sélectionne la structure, par exemple en cliquant dedans grâce au pointeur virtuel puis valide par l'actionnement d'un bouton. Les moyens d'adaptation automatique 122 de la palette de couleurs calculent alors la valeur maximale $R_{max}$ de la variable mesurée dans l'image TEP au sein de la région d'intérêt dans un rayon donné et la valeur minimale $M_{in}$ de la variable mesurée à l'extérieur de la région dans un rayon donné, par exemple 5 mm, autour de cette région. Le niveau minimal $P_{min}$, respectivement maximal $P_{max}$, de la palette de couleur est alors réaffecté de la valeur minimale $R_{min}$, respectivement maximale $R_{max}$, de la variable précédemment calculée dans la région d'intérêt. Les couleurs entre le noir et le blanc sont rééchelonnées régulièrement entre les valeurs maximales et minimales.

Ces moyens d'adaptation automatique 122 de la palette de couleurs de l'image sont d'une utilité majeure pour un médecin nucléaire : ils accélèrent et améliorent la tâche de détection, et par conséquent l'établissement d'un diagnostic.

Les moyens de détection 118 mettent en oeuvre une méthode de détection, selon l'invention. Elle sera décrite par la suite. Par l'exécution de cette méthode, des régions d'intérêt, appelées candidats, sont détectées, et un classement est établi selon leur probabilité d'être des structures particulières, telles que des tumeurs.

Les moyens d'affichage des structures détectées 130 permettent à l'opérateur de voir tous les candidats, c'est-à-dire les régions d'intérêt semblant être une tumeur, par exemple, entre un rang $N_{min}$ et un rang $N_{max}$ du classement établi par les moyens de détection 118. Les candidats sont identifiés par exemple par des flèches ou par un spot de couleur dans l'image. Un code, par exemple de couleur, est destiné à visualiser immédiatement leur rang dans le classement.

Après avoir identifié les structures particulières, telles que des tumeurs, des moyens de quantification 126 calculent des paramètres diagnostics quantitatifs connus et utilisés par les médecins pour analyser plus précisément les structures particulières, par exemple pour réaliser un suivi médical. Les paramètres diagnostics sont par exemple : le SUV moyen ou maximal selon l'acronyme anglais « Standard Uptake Value », le volume de la région, ou la quantité totale d'activité dans la région.

De plus, dans le cadre d'un suivi médical au cours d'un traitement par exemple, des moyens de comparaison 128 permettent de comparer les valeurs des paramètres diagnostics calculés par les moyens de quantification 126 sur deux images différentes.

Ces paramètres et le résultat de la comparaison sont visualisés par le médecin sur des moyens d'affichage d'informations 132.

Selon un mode de réalisation le système informatique 108 du dispositif d'imagerie 106 comporte le dispositif de traitement d'image 100.

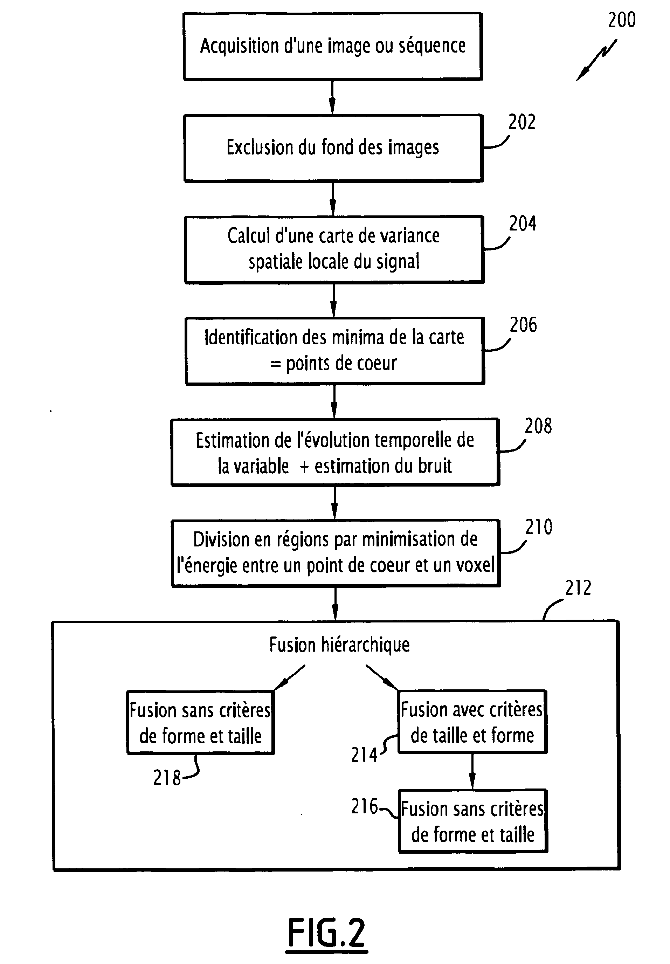

La figure 2 présente une méthode de segmentation 200 d'une image ou séquence d'images tridimensionnelles 109 d'un sujet 104, afin d'obtenir une image ou séquences d'images tridimensionnelles partitionnées en des régions d'intérêt 116.

L'image ou séquence d'images 109 acquise par le dispositif d'imagerie 102 comprend une pluralité de voxels et des mesures pour chacun des voxels d'une variable de l'image ou séquence d'images 109, au cours de n intervalles de temps ($n \geq 1$).

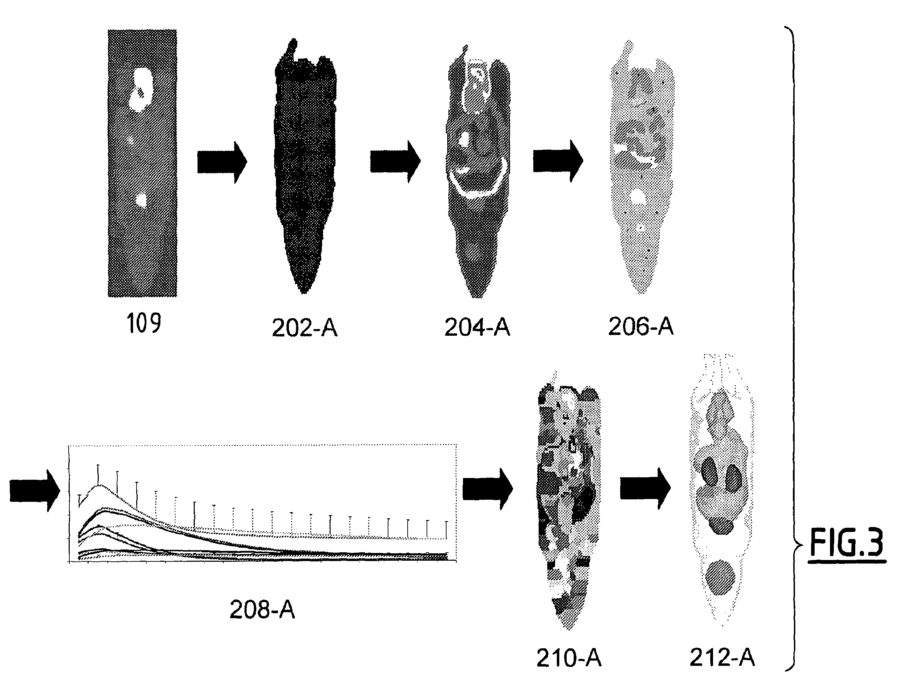

La figure 3 est une représentation des images successives obtenues lors de l'exécution de cette méthode de segmentation 200 à une image d'un rongeur acquise par la technique d'imagerie TEP. Dans le cas de cette technique, ladite variable mesurée est la concentration du traceur. Lorsque la mesure est effectuée en fonction du temps, cette variable est nommée pharmacocinétique et les régions d'intérêts sont appelées des pharmaco-organes. Dans cet exemple de réalisation, l'image TEP d'émission est statique et les structures à segmenter sont des tumeurs.

Le tracé des régions d'intérêt suppose que chaque organe présente un comportement homogène pour un traceur donné.

Par « pharmaco-organe », on entend ainsi de manière connue dans la présente description une structure de l'organisme dont tous les éléments présentent une réponse identique à un traceur. En conséquence, un « pharmaco-organe » est une structure au sein de laquelle la concentration du traceur est homogène.

En référence aux figures 2 et 3, la méthode de segmentation 200 comprend trois phases successives : une phase de préparation de l'image ou séquence d'images, une phase de division de l'image en des régions d'intérêt et enfin une phase de fusion.

Au cours de la phase de préparation de l'image ou séquence d'images, une étape d'extraction d'un fond 202 est réalisée.

En effet, l'image ou séquence d'images 109 acquise par le dispositif d'acquisition d'images 102 comporte deux zones, l'une associée au sujet 104 et l'autre représentant un fond. En dehors de l'organisme, l'image TEP ne contient que du bruit, des artefacts de reconstruction et des zones sans intérêt diagnostic (le lit, la blouse du patient, etc.). Ce fond peut donc sans dommage être éliminé de la segmentation, ce qui accélère celle-ci et diminue les risques d'erreurs.

De façon connue, l'image ou séquence d'image est tout d'abord lissée avant d'être segmentée par une fonction gaussienne dont la largeur à mi-hauteur maximise le rapport contraste sur bruit au niveau des tumeurs.

Pour extraire le fond, une image en transmission est acquise avant ou après l'image d'émission sur un système TEP, afin de corriger l'image d'émission de l'atténuation des photons par le corps du patient. Une valeur seuil est définie sur cette image en transmission à une valeur d'atténuation intermédiaire entre l'air et le tissu mou et permet d'extraire un masque des tissus de l'organisme, en ne gardant que les voxels dont la valeur est supérieure à cette valeur seuil. Lors de cette extraction du masque des tissus de l'organisme, tout ou partie des poumons et de la lumière de l'intestin peut être exclus du masque. Ces régions étant localisées à l'intérieur du corps, elles sont bordées de tissus et non connectées à l'extérieur de l'organisme. Le masque du fond 202-A à exclure de la segmentation est donc calculé comme la plus grande composante connexe (au sens de la morphologie mathématique) de l'inverse du masque des tissus de l'organisme.

La méthode de segmentation 200 comprend en outre une étape de calcul 206 d'une carte de variance spatiale locale 204-A de ladite variable, par exemple le signal TEP (activité ou concentration du traceur), en intégrant la variation temporelle du signal. Une telle variance est calculée pour chaque voxel de l'image ou séquence d'images 104.

La variance du bruit dans l'image TEP est supposée égale à $\sigma_{n,t}^2 = \alpha^2 \times S_{n,t} \times DC_t / \Delta_t$ si l'image a été reconstruite avec un algorithme itératif de reconstruction (SI pour « *Statistical Iterative* »), et à $\sigma_{n,t}^2 = \alpha^2 \times DC_t / \Delta_t$ si l'image a été reconstruite par rétroprojection filtrée (FBP pour « *Filtered Back Projection* », en anglais), où $\sigma_{n,t}^2$ et $S_{n,t}$ sont respectivement la variance du bruit et le signal sans bruit au voxel n et au temps t, et où $\Delta_t$ est la durée de la trame temporelle t et DC, est le facteur rendant compte de l'accroissement du bruit dû à la décroissante radioactive. Le facteur $\alpha^2$ est supposé stationnaire dans l'espace et dans le temps. Il est donc supposé égal à $\alpha^2 = \Delta_t \times \sigma_{n,t}^2 / (S_{n,t} \times DC_t)$ (SI) et $\alpha^2 = \Delta_t \times \sigma_{n,t}^2 / DC_t$ (FBP), et est estimé dans les régions de l'image non affectées par l'effet de volume partiel par :

$$\Gamma_n = \frac{1}{T} \times \sum_{1 \le t \le T} \left( \frac{\Delta_t}{\#(V_n) - 1} \times \sum_{j \in V_n} \frac{(Y_{j,t} - \mu_{n,t})^2}{\mu_{n,t}} \right) \quad \text{(SI)}$$

et

$$\Gamma_n = \frac{1}{T} \times \sum_{1 \le t \le T} \left( \frac{\Delta_t}{\#(V_n) - 1} \times \sum_{j \in V_n} (Y_{j,t} - \mu_{n,t})^2 \right) \quad \text{(FBP)},$$

où $V_n$ est un voisinage cubique du voxel n, par exemple de taille $3 \times 3 \times 3$ pour la détection de tumeur, $\mu_n$ est l'activité ou la pharmacocinétique moyenne sur $V_n$ et une estimation du signal $S_n$.

La valeur $\Gamma_n$ reflète en partie le bruit, et en partie le volume partiel et/ou les mouvements physiologiques. $\Gamma_n$ est minimale et est une bonne approximation de $\alpha^2$ lorsque $V_n$ n'est affecté ni par l'effet de volume partiel, ni par les mouvements physiologiques, et atteint des minima locaux au coeur des organes.

$\Gamma_n$ rend compte des variations locales des cinétiques au voisinage du voxel n, corrigées de la dépendance du bruit au signal $DC_t$ et à $\Delta_t$.

$\Gamma_n$ est calculé pour chaque voxel n à l'intérieur du masque de l'organisme délinéé à l'étape d'extraction du fond 202.

Ensuite les minima locaux de la carte de variance spatiale locale du signal TEP sont extraits, au cours de l'exécution d'une étape d'extraction automatique 206 d'au moins un point de coeur de l'image ou de la séquence d'images 104. Les points de coeur sont les pixels des minima de la carte de variance spatiale locale de ladite variable. L'ensemble de ces pixels 206-A est noté A = $\{n | \forall j \in V_n, \Gamma_n < \Gamma_j\}$.

Après extraction des points de coeur, est effectuée une étape d'extraction 208 d'une évolution temporelle 208-A de ladite variable en chaque point de coeur. Une estimation des paramètres globaux du bruit est également effectuée.

Le processeur calcule les pharmacocinétiques locales et estime des paramètres globaux du bruit (c'est-à-dire $\alpha^2$) dans un voisinage des points de coeur (de l'ensemble Λ). Le voisinage utilisé pour le calcul de la concentration d'activité ou de la pharmacocinétique au sein d'une petite région, par exemple une tumeur, est de taille réduite pour limiter l'effet du volume partiel. Le paramètre $\alpha^2$ est estimé en utilisant les plus petites valeurs de l'ensemble $\{\Gamma_m | m \in \Lambda\}$.

La seconde phase du procédé de segmentation 200 comprend une étape de division 210 de l'image ou séquence d'images 104 en une pluralité de régions 210-A. Le nombre de points de coeur extraits au cours de l'étape d'extraction automatique 206 d'au moins un point de coeur définit le nombre de régions de l'image ou séquence d'images partitionnées à la fin de l'étape de division 210.

Pour cela et de façon connue, une approche dite de « marche rapide » (couramment appelée « fast marching » en anglais) est utilisée pour extraire simultanément les contours actifs d'énergies minimales qui joignent chaque voxel $m \in A$ à tous les voxels dans son voisinage. Le voxel n est agrégé au voxel $m \in A$ qui minimise l'énergie du contour actif d'énergie minimale qui joint les deux voxels m et n.

Pour éviter le calcul superflu d'autant de cartes que de voxels appartenant à l'ensemble Λ, les cartes d'énergies de contours actifs originales de tous les éléments de Λ sont calculées simultanément et concurrentiellement sur la même carte, selon le principe qu'un voxel est associé au voxel de Λ dont la carte d'énergie l'atteint en premier.

L'image TEP du sujet est alors partitionnée en autant de régions qu'il existe de voxels dans l'ensemble Λ, c'est-à-dire de points de coeur, chaque région étant une composante connexe.

Enfin, la dernière phase procédé de segmentation 200 comporte une étape 212 de fusion hiérarchique des régions issues de l'étape de division 210 afin d'obtenir l'image ou séquence d'images tridimensionnelles partitionnée en régions d'intérêt 212-A.

Dans une optique de détection de tumeur, les tumeurs doivent être préservées lors de la fusion, c'est-à-dire ne pas être fusionnées. Or le contraste apparent des petites tumeurs dans l'image TEP est très inférieur à leur contraste réel, du fait de l'effet de Volume Partiel. En effet, plus une tumeur est petite, et plus elle apparaît sous une forme sphérique dans l'image TEP.

C'est pourquoi, l'étape de fusion hiérarchique 212 comprend deux étapes de fusion successives, l'une 214 utilisant des critères de forme et de taille des régions pour ne pas fusionner les régions de petite taille, et l'autre sans 216, sans critères de forme et de taille des régions, des régions en régions d'intérêt, sans distinction de forme ou de taille.

De façon connue, au cours de l'étape de fusion hiérarchique 212, un coût de fusion entre deux régions est calculé à partir de l'évolution au cours du temps de ladite variable en chaque point de coeur et de l'estimation des paramètres globaux du bruit extraites au cours de l'étape d'extraction 208.

Ensuite, selon un algorithme de fusion hiérarchique (en anglais *« hierarchical linkage »),* les régions sont fusionnées selon une règle du coût de fusion minimal créant une nouvelle région ou agrégat de régions. Les coûts de fusion des régions deux à deux sont mis-à-jour (recalculés) à chaque étape de fusion et ce jusqu'à ce qu'il reste un nombre de régions prédéterminé par l'opérateur. De plus le coût de fusion pour un couple de régions ou d'agrégats de régions qui ne sont pas connexes est toujours infini.

Le coût de fusion, entre une région $R_1$ et une région $R_2$, est défini :

- pour l'étape de fusion 216 sans critères de forme et de taille des régions, par Coût($R_1,R_2$)=H($R_1,R_2$), où H est une fonction dépendant des variations du signal dans les régions $R_1$ et $R_2$, et

- pour l'étape de fusion 214 avec des critères de forme et de taille des régions, pa

$$r \quad \text{Coût}(R_1,R_2) = \frac{H(R_1,R_2)}{F(R_1)F(R_2)G(R_1)G(R_2)}$$ où F et G sont des fonctions dépendant respectivement de la forme et de la taille de la région.

Le coût de fusion entre deux régions comprend donc :

- un terme prenant en compte la différence d'activité et/ou éventuellement de décours temporel entre les deux régions, la fonction H,
- un terme lié à la forme de chacune des deux régions, la fonction F, et
- un terme lié à la taille de chacune des deux régions, pénalisant la fusion de petites régions, la fonction G.

De façon connue, $H(A,B) = \dfrac{1}{T}\sum_{1\leq t\leq T}\left(\mu_{m_A,t} - \mu_{m_B,t}\right)^2$, où $m_A$ et $m_B$ sont les points de coeur des régions A et B dont la variance spatiale locale de la variable est minimale, c'est-à-dire

$$m_A = \arg\min_{m\in A}(\Gamma_m) \text{ et } m_B = \arg\min_{m\in B}(\Gamma_m).$$

Le critère de taille pour une région est son volume.

Le critère de forme pour une région est le rapport surface sur volume : $S\sqrt{S}/V$. Ce critère est indépendant de la taille pour une sphère ou un cube. Il est d'autant plus élevé que la région est non sphérique et ce quelle que soit la taille de la région. Cependant, il varie peu (de 1 à 10) en comparaison du volume (variation de 1 à 100000), c'est pourquoi ce rapport est élevé à une puissance importante, par exemple 4, pour générer un écart entre les structures sphériques et les structures aux formes plus torturées.

Dans cette première variante, afin d'éviter que cette préservation des petites tumeurs nuise à la fusion de plusieurs régions correspondant au même foyer tumoral, la fusion est conduite en deux étapes exécutées successivement par le processeur :

a) une fusion des régions ne correspondant pas à des tumeurs, en conservant un nombre de régions R élevé, c'est-à-dire selon l'étape de fusion 214 avec critères de forme et de taille des régions, et

b) une fusion à partir de l'image de segmentation à R régions issues de l'étape a) permettant de fusionner entre elles des régions correspondant à la même tumeur, selon l'étape de fusion 216 sans critères de forme et de taille des régions.

Selon un autre mode de réalisation l'étape de fusion hiérarchique 212 est une double fusion comprenant une étape de fusion 218 sans critères de forme et de taille des régions à partir de l'image ou séquence d'images divisée en régions résultant de l'exécution de l'étape de division 210 et parallèlement à l'étape de fusion 214 utilisant des critères de forme et de taille des régions à partir de la même image ou séquence d'images suivie de l'étape de fusion 216 sans critères de forme et de taille des régions à partir de l'image ou séquence d'images résultant de l'exécution de l'étape de fusion 214 avec critères de forme et de taille des régions qui la précède.

Cette seconde variante permet d'éviter que cette préservation des petites tumeurs empêche la formation de régions correspondant aux organes, à cause de l'introduction du critère de forme adapté aux tumeurs, le processeur exécute une double fusion, c'est-à-dire une pour les organes et une pour les tumeurs.

Deux étapes de fusions différentes sont alors conduites parallèlement à partir de l'image partitionnée en régions d'intérêt suite à l'exécution par le processeur de l'étape de division 210 de l'image :

- pour la segmentation des organes, l'étape de fusion 218 sans critères de forme et de taille des régions sera exécutée par le processeur, et
- pour la segmentation des tumeurs, le processeur exécutera la fusion en deux étapes 214 puis 216 décrite dans la première variante.

Pour la détection de tumeurs il est important de conserver non seulement toutes les régions avant fusion, mais également les régions générées à l'issue d'une étape de fusion 214 et/ou 216.

Si la segmentation est conduite après fusion sans critère de forme et de taille 216, 2M-1 régions sont conservées à l'issue de l'étape de fusion hiérarchique 212, où M est le nombre de points extraits au cours de l'exécution de l'étape d'extraction 206 des points de coeurs.

Cependant, les premières régions fusionnées ont peu de chance d'être des tumeurs. Pour limiter la détection aux régions dont la probabilité d'être une tumeur est la plus forte, il est possible de partir d'une image de segmentation intermédiaire issue d'une première étape de fusion.

Ainsi, si la segmentation est conduite avec une étape de fusion 214 utilisant des critères de forme et de taille des régions, 2R-1 régions sont conservées à l'issue de l'étape de fusion hiérarchique 212, où R est le nombre de régions issues de la première étape de fusion 214 avec critères de forme et de taille des régions.

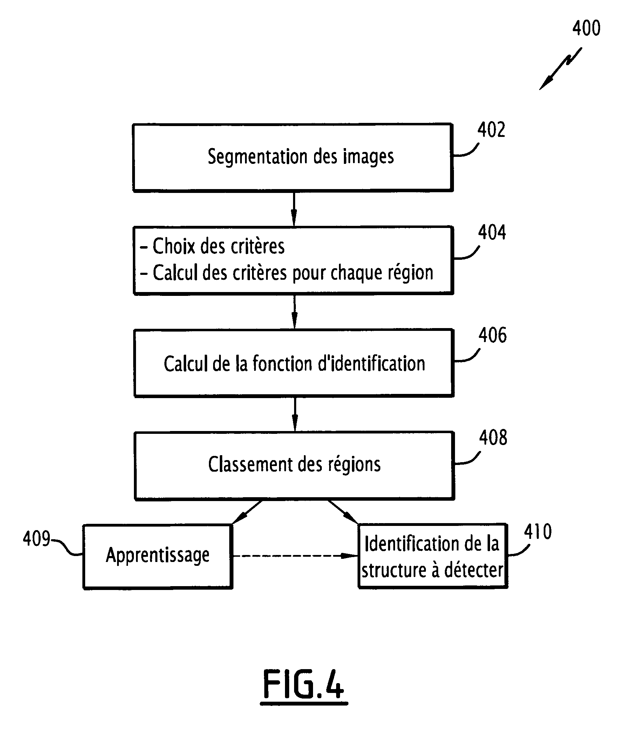

La figure 4 est un schéma-bloc illustrant la méthode de détection 400 d'au moins une structure particulière sur une image ou séquence d'images selon l'invention. Par exemple la méthode de détection de structures spécifiques est exécutée par le processeur afin de détecter des tumeurs.

Cette méthode de détection 400 comprend tout d'abord une étape de segmentation 402 de l'image ou séquence d'images destinée à la partitionner en une pluralité de régions d'intérêt. L'exécution de l'étape de segmentation fournit une description hiérarchique des régions délimitant des structures. Soit l'opérateur en extrait une image de segmentation comprenant un nombre N de régions (N étant suffisamment grand), soit il utilise les 2M-1 ou 2R-1 régions générées par l'étape de fusion hiérarchique 212. De préférence, l'opérateur utilise les 2R-1 régions générées par l'étape de fusion 216 sans critères de forme ni de taille des régions réalisée après l'étape de fusion 214 avec les critères de forme et de taille des régions.

La méthode de détection 400 d'une structure particulière comporte en outre une étape de calcul d'une pluralité de critères 404 pour discriminer les structures particulières à détecter pour chaque région d'intérêt. Au cours de son exécution, le processeur calcule les critères retenus pour la détection de tumeurs. Ces critères sont les suivants, pour chaque région i

- des critères liés à l'activité :

o le contraste est calculé comme $(\mu_n - \upsilon_n)/ \upsilon_n$ où $\mu_n$ est la moyenne de l'activité au sein du voisinage $V_n$ du voxel n et où $\upsilon_n$ est la médiane de l'activité en périphérie de la tumeur à une distance des bords de celle-ci située entre 2 et 4 fois la largeur à mi-hauteur de la résolution du système d'imagerie TEP.

$$C_1(i) = \frac{\mu_i - \upsilon_i}{\upsilon_i}$$

o le contraste sur bruit est calculé comme $(\mu_n - \upsilon_n)/(\upsilon_n \times \sigma_n)$, où $\sigma_{n,t}^2 = \alpha^2 \times DC_t / \Delta_t$, pour chaque voxel n, pour une image TEP reconstruite par un algorithme analytique et $\sigma_n^2 = \alpha^2 \times \upsilon_n \times DC_t / \Delta_t$ pour une image reconstruite par un algorithme statistique itératif. Le facteur constant $\alpha^2$ étant calculé dans l'image TEP lors de l'étape 4 de la segmentation.

$$C_2(i) = \frac{\mu_i - \upsilon_i}{\upsilon_i \times \sigma_i}$$

- un critère de distinction entre tumeurs et points de bruit. Afin de distinguer tumeurs et points de bruit, l'image TEP sans post-lissage subit une convolution par une gaussienne dont la largeur à mi-hauteur est faite variée entre 0 et trois fois la largeur à mi-hauteur qui maximise le rapport contraste sur bruit. Pour chaque niveau de lissage, les minima locaux de l'image $\Gamma_n$ sont extraits. Pour chaque minimum extrait au niveau de lissage qui maximise le rapport contraste sur bruit, l'intervalle de largeur à mi-hauteur de la gaussienne (FWHM pour « Full Width at Half Maximum », en anglais) pour lequel ce minimum apparaît dans les autres images est extrait. Plus cet intervalle est important, et plus le minimum extrait correspondant à la région à une probabilité faible de correspondre à un pic de bruit. L'étendue de cet intervalle $FWHM_{Max}(i)$-$FWHM_{Min}(i)$ est donc utilisée comme critère de détection.

$$C_3(i) = FWHM_{Max}(i) - FWHM_{Min}(i)$$

- des critères de taille et de forme, tels que déjà définis précédemment et utilisés au cours de l'exécution de la méthode de segmentation selon l'invention :

  o le rapport surface sur volume. En effet, les tumeurs sont des régions de plus forte activité, donc avec un rapport signal sur bruit plus élevé que dans une zone homogène. Par voie de conséquence, les contours des tumeurs sont plus lisses que les ceux des régions associés aux pics de bruit. Les petites tumeurs apparaissant comme des sphères dans les images TEP, elles présentent un critère de sphéricité élevé. Ce critère de sphéricité est plus faible pour les tumeurs de taille plus importantes et aux formes moins sphériques, mais cette perte de sphéricité est compensée par un contraste et un rapport contraste sur bruit élevé. Le critère de sphéricité est le suivant :

$$C_4(i) = \frac{V_i}{S_i \sqrt{S_i}}.$$

  o le volume. En effet, les plus petites tumeurs sont fortement affectées par l'effet de volume partiel qui diminue leur contraste apparent avec les tissus environnants. Ce critère de détection : $C5(i) = 1/V_i$, a pour principal objectif de compenser la perte de contraste d'une tumeur due à une taille plus réduite.

$$C_4(i) = \frac{V_i}{S_i \sqrt{S_i}}.$$

- Un critère de nombre de points extraits dans la tumeur lors de l'étape d'extraction 206 des points de coeur de la méthode de segmentation 200, afin de dissocier les tumeurs des organes de grandes tailles (coeur, foie, reins).

Pour des tumeurs, ce nombre de points extraits est plus réduit (rarement plus de trois) que dans les organes (souvent plus de trois). $N_i$ étant le nombre de points de coeur extraits dans la tumeur lors de l'étape d'extraction 206 des points de coeur de la méthode de segmentation 200,

$$C_6(i) = \frac{1}{N_i}$$

- Un critère d'allure des cinétiques. Les tumeurs et les zones inflammatoires sur une image TEP dynamique sont différenciées selon les pharmacocinétiques mesurées dans les régions. Elles sont donc séparées par ce critère d'allure de cinétique :

    o si la cinétique ne contient que deux points de temps, la pente est croissante dans les régions tumorales. Le critère correspondant est alors :

$$C_7(i) = \frac{\mu_{i,1} - \mu_{i,0}}{\mu_{i,1} + \mu_{i,0}}$$

    o si la cinétique contient de nombreux points de temps, la cinétique extraite dans une région est comparée à un jeu de cinétiques $\mu_i^{(k)}$ spécifiques du type de cancer suspectés, et :

$$C_7(i) = \min_k \left( \left\| \frac{\mu_i}{\|\mu_i\|} - \frac{\mu_i^{(k)}}{\|\mu_i^{(k)}\|} \right\| \right)$$

Le dispositif informatique calcule ainsi pour chaque région i une série $\{C_j(i)\}_{1 \leq j \leq J}$ de critères, censés prendre des hautes valeurs pour les régions correspondant à des structures à détecter et des valeurs plus faibles pour les autres régions.

Ensuite est effectuée une étape de calcul 406 d'une fonction d'identification dépendant de la pluralité de critères pour chaque région d'intérêt. Le processeur calcule la fonction d'identification $f_\Theta\left(\{C_j(i)\}_{1 \leq j \leq J}\right) = \sum_{j=1}^{J} \theta_j \times C_j(i)$ qui dépend de la pluralité des critères pour chaque région d'intérêt. La fonction d'identification est une fonction paramétrique dépendant d'un jeu de paramètres $\Theta = \{\theta_j\}_{1 \leq j \leq J}$, les paramètres $\theta_j$ étant les poids affectés à chaque critère $C_j(i)$. Les paramètres $\Theta = \{\theta_j\}_{1 \leq j \leq J}$ peuvent être constants sur l'image, mais aussi constants par morceaux (par exemple, constants à l'intérieur de chaque organe) ou varier de manière continue sur l'espace (par exemple, selon un atlas probabiliste décrivant les organes).

Puis les régions sont triées au cours d'une étape de classement des régions 408, par valeurs décroissantes de leur fonction d'identification $f_\Theta(\{C_j(i)\}_{1 \leq j \leq J})$ puis un rang correspondant leur est attribué. La structure à détecter est identifiée au cours de l'exécution de l'étape d'identification 410. Ainsi la région de rang 1 sera celle qui sera la plus probablement une structure à détecter, par exemple une tumeur.

Selon une autre variante, la méthode d'identification 400 est exécutée pour identifier plusieurs types différents de structures. Pour cela, des fonctions d'identification f(1), f(2), ..., f(L), différentes sont définies. Il peut arriver que deux ou plus de ces fonctions soient les mêmes, mais avec des valeurs de jeux de paramètres $\Theta$ différents. Ces fonctions d'identifications auront probablement certains critères d'identification communs.

La détection requiert un apprentissage sur un jeu B d'images b représentatives des images dans lesquelles on espère détecter les structures (par exemple des tumeurs). Ces images doivent toutes contenir au moins une de ces structures, et de préférence plusieurs d'entre elles. Dans les images de la base d'apprentissage B, les structures à détecter sont marquées d'une manière ou d'une autre comme étant les structures que l'on cherche. Dans une autre variante, on marque également d'autres structures comme n'étant pas des structures que l'on cherche ou à défaut considérer que toutes les régions non marquées ne sont pas des structures à détecter.

Considérant toutes les images de la base d'apprentissage B, une étape d'apprentissage 409 est réalisée et ne sera pas décrite ici. L'étape d'apprentissage 409 permet, sur un certain jeu d'images, de déterminer le jeu de paramètre Θ qui optimise la détection des structures.

L'étape d'apprentissage peut être conduite sur plusieurs types de structures différentes, par exemple, métastase, petite tumeur, grosse tumeur non-nécrotique, tumeur nécrotique, agrégat de tumeurs.

L'étape de détection de ces divers types de structures se fait simultanément : tous les critères d'identification dont les f(1), f(2), ..., f(L) sont fonctions sont calculés pour toutes les régions. Les rangs d'identification sont alors calculés pour chacune de ces fonctions et chacun de ces jeux de paramètres estimés sur la base d'apprentissage.

Selon une autre variante, une détection concurrentielle est réalisée entre les diverses fonctions d'identification.

Dans le cas où le dispositif d'imagerie 102 est un dispositif d'imagerie selon la technique de tomographie par émission de positons, l'image ou séquence d'images de l'objet ou sujet 104 est une image ou séquence d'images d'un organisme entier et les régions d'intérêts issues du procédé de segmentation selon l'invention sont des pharmaco-organes, c'est-à-dire que les régions d'intérêt correspondent à des organes fonctionnels. Ladite variable représente la concentration radioactive en un instant donné d'au moins un principe actif marqué et injecté dans l'organisme, l'ensemble des voxels à l'intérieur de chaque pharmaco-organe présentant des cinétiques pharmacologiques de répartition dudit principe actif qui sont similaires.

En effet, les variations de la concentration du traceur à l'intérieur d'un voxel sont fortement corrélées spatialement du fait de l'existence d'un continuum d'homogénéité issu non seulement du procédé de reconstruction de l'image TEP mais également de l'existence de régions physiologiques qui répondent au traceur de façon identique, régions appelées pharmaco-organes.

Les cinétiques sont ainsi supposées homogènes au sein de chaque pharmaco-organe. Cette homogénéité, mesurée comme l'inverse de la variance locale, est maximale au coeur des pharmaco-organes et minimale sur les bords de ces pharmaco-organes. Le principal facteur d'inhomogénéité du signal TEP dans un pharmaco-organe est l'effet dit « de Volume Partiel » dû à la résolution limitée du système TEP.

L'organisme peut-être animé de mouvements physiologiques soit de type périodique, comme la respiration, dont la période est réduite en comparaison de la durée d'acquisition de l'image ou chacune des images de la séquence, soit de type non périodique.

Ces méthodes de segmentation et de détection de structures particulières et le dispositif informatique associé sont destinés à aider le médecin nucléaire, mais en aucun cas de se substituer à lui. La méthode de détection ne fait que présenter des régions triées de la plus probablement tumorale à la moins probablement. Il ne s'agit ici que de probabilité relative des régions entre elle et ne constitue pas un diagnostic, la décision finale revenant au médecin nucléaire. La méthode peut être utile, inutile ou induire en erreur, mais elle ne peut pas commettre des erreurs de diagnostic. Elle est d'autant plus utile que le médecin nucléaire est débutant ou peu entraîné et dans des organes pour lesquels la sensibilité et la spécificité du diagnostic sont faibles sans cet outil.

Ce point est crucial, car le nombre de médecin nucléaire par patient est amené à diminuer : il devient essentiel de fournir des outils d'aide au diagnostic qui accélèrent et renforcent la confiance dans le diagnostic de médecin subissant une force surcharge de travail et d'un temps de plus en plus court pour lire l'image TEP. Ce manque de personnel qualifié pour le diagnostic en oncologie réclamera probablement d'avoir recours au diagnostic par du personnel médical moins qualifié (infirmières) ou dont ce n'est pas la spécialité (radiologues). Ce personnel, pour être efficace, devra être formé. La méthode permet de former l'utilisateur au fur et à mesure en attirant son regard vers les zones de l'image qui sont les plus probablement des tumeurs.

La méthode de segmentation est utilisée pour délimiter automatiquement le contour des tumeurs dans les images TEP d'oncologie. Puis la méthode automatique d'aide à la détection des tumeurs segmentées par la méthode de segmentation, basée sur un tri des régions selon leur probabilité d'être une tumeur, permet d'améliorer la sensibilité et la spécificité du diagnostic. Enfin, le dispositif informatique permet de réaliser la détection, la délinéation des tumeurs et l'extraction de paramètres diagnostics (contraste, contraste sur bruit, volume fonctionnel) à partir de la méthode automatique d'aide à la détection.

Ces méthodes de segmentation et de détection de structures particulières et le dispositif informatique associé permettent :

- tout d'abord d'améliorer à la fois la sensibilité, en diminuant le nombre de faux négatifs, et la spécificité, en diminuant le nombre de faux positifs, du diagnostic par le médecin nucléaire, en particulier dans le cas difficile des petites tumeurs avec un contraste parfois faible par rapport au fond,
- de faciliter et d'accélérer le travail du médecin nucléaire par une navigation dans les images, détection de tumeurs, extraction de paramètres diagnostics quantitatifs,
- de permettre d'entraîner un médecin nucléaire peu expérimenté ou manquant de pratique à progresser, sur des données de référence, mais aussi sur ses propres données, en guidant son regard vers les zones les plus probablement des tumeurs, et
- d'aider le radiothérapeute en offrant un outil de délimitation des foyers et des zones à épargner.

**Revendications**

1. Méthode de segmentation d'une image ou séquence d'images tridimensionnelles d'un objet afin d'obtenir une image ou séquence d'images tridimensionnelles partitionnée en des régions d'intérêt, comprenant, dans l'ordre d'exécution de la méthode, les étapes suivantes :

   - une division (210) de l'image ou séquence d'images en une pluralité de régions ; puis
   - une fusion hiérarchique (212) des régions issues de la division (210) afin d'obtenir l'image ou séquence d'images tridimensionnelles partitionnée en régions d'intérêt ;

   **caractérisée en ce que** l'étape de fusion hiérarchique (212) comprend une étape de fusion (214) utilisant des critères de forme et de taille des régions pour ne pas fusionner les régions de petite taille.

2. Méthode de segmentation selon la revendication 1, **caractérisée en ce que** l'étape de fusion hiérarchique (212) comprend en outre une étape de fusion (216) des régions sans critères de forme et de taille des régions destinée à fusionner les régions en régions d'intérêt, sans distinction de forme ou de taille.

3. Méthode de segmentation selon la revendication 2, **caractérisée en ce que** l'étape de fusion (216) des régions sans critères de forme et de taille des régions est réalisée après l'étape de fusion (214) utilisant des critères de forme et de taille des régions et à partir de l'image ou séquence d'images résultant de l'exécution de cette étape de fusion (214).

4. Méthode de segmentation selon la revendication 3, **caractérisée en ce que** l'étape de fusion hiérarchique (212) est une double fusion comprenant en outre une étape de fusion (218) sans critères de forme et de taille des régions à partir de l'image ou séquence d'images divisée en régions résultant de l'exécution de l'étape de division (210).

5. Méthode de segmentation selon l'une quelconque des revendications 2 à 4, **caractérisée en ce que** la ou chaque étape de fusion (216, 218) des régions sans critères de forme et de taille des régions comprend une étape de calcul d'un coût de fusion, entre une région $R_1$ et une région $R_2$, défini par :

$$\text{Coût}(R_1, R_2) = H(R_1, R_2)$$

   H étant une fonction dépendant des variations du signal dans les régions $R_1$ et $R_2$ ; puis une étape de fusion des images selon une règle du coût de fusion minimal.

6. Méthode de segmentation selon l'une quelconque des revendications 1 à 5, **caractérisée en ce que** l'étape de fusion (214) utilisant des critères de forme et de taille des régions pour ne pas fusionner les régions de petite taille comprend une étape de calcul d'un coût de fusion, entre une région $R_1$ et une région $R_2$, défini par :

$$\text{Coût}(R_1, R_2) = \frac{H(R_1, R_2)}{F(R_1)F(R_2)G(R_1)G(R_2)}$$

   H étant la fonction dépendant des variations du signal dans les régions $R_1$ et $R_2$, F et G étant des fonctions dépendant respectivement de la forme et de la taille de la région ; puis une étape de fusion des images selon une règle du coût de fusion minimal.

7. Méthode de segmentation selon l'une quelconque des revendications 1 à 6, **caractérisée en ce que** l'image ou séquence d'images comprend une pluralité de voxels et des mesures pour chacun des voxels d'une variable de l'image ou séquence d'images, au cours de n intervalles de temps n ≥ 1 et **en ce que** la méthode de segmentation comprend, avant l'étape de division (210) en régions, les étapes suivantes destinées à définir le nombre de régions séparées au cours de l'étape de division (210) :

   - un calcul (204) d'une carte de variance spatiale locale de ladite variable mesurée de l'image ou séquence d'images, au cours du temps et pour chaque voxel de l'image ou séquence d'images ; puis

- une extraction automatique (206) d'au moins un point de coeur de l'image ou séquence d'images, les points de coeur étant les pixels des minima de la carte de variance spatiale locale de ladite variable ; le nombre de points de coeur extraits au cours de cette étape définissant le nombre de régions de l'image ou séquence d'images divisées à la fin de l'étape de division (210).

8. Méthode de segmentation selon la revendication 7, **caractérisée en ce qu'**elle comprend après l'étape d'extraction automatique (206) des points de coeur et avant l'étape de division (210), une étape d'extraction (208) d'une évolution temporelle de ladite variable du ou de chaque point de coeur et une estimation des paramètres globaux du bruit, destinée à calculer le coût de fusion lors de l'étape de fusion hiérarchique (212).

9. Méthode de segmentation selon l'une quelconque des revendications 7 à 8, **caractérisée en ce que** chaque région issue de l'étape de division (210) de l'image ou séquence d'images correspond à un point de coeur résultant de l'étape d'extraction automatique (206) des points de coeur de l'image ou séquence d'images et chaque région regroupe les pixels ayant une évolution temporelle de ladite variable similaire.

10. Méthode de segmentation selon l'une quelconque des revendications 1 à 9, **caractérisée en ce qu'**elle comprend une étape d'exclusion d'un fond (202) de l'image ou séquence d'images comprenant une étape de définition d'un seuil de l'image ou séquence d'images destinée à extraire un masque de l'objet à partir d'une image acquise en transmission de l'objet afin d'appliquer la méthode de segmentation à l'objet uniquement.

11. Méthode de segmentation selon la revendication 10, **caractérisée en ce que** l'étape d'exclusion du fond (202) comprend une étape de lissage pour maximiser un contraste de l'image dans les régions d'intérêt de petite taille avant l'étape de définition d'un seuil.

12. Méthode de segmentation selon l'une quelconque des revendications 1 à 11, **caractérisée en ce que** ladite image ou séquence d'images est préalablement acquise par un dispositif d'imagerie selon la technique de tomographie par émission de positons.

13. Méthode de segmentation selon l'une quelconque des revendications 1 à 12, **caractérisée en ce que** l'image ou séquence d'images d'un objet est une image ou séquence d'images d'un organisme entier, ladite méthode de segmentation segmentant l'organisme selon une partition en pharmaco-organes.

14. Méthode de segmentation selon la revendication 13, **caractérisée en ce que** l'organisme est animé de mouvements physiologiques soit de type périodique, dont la période est réduite en comparaison de la durée d'acquisition de l'image ou chacune des images de la séquence, soit de type non périodique.

15. Méthode de segmentation selon l'une des revendications 13 à 14, **caractérisée en ce que** ladite variable représente la concentration radioactive en un instant donné d'au moins un principe actif marqué et injecté dans l'organisme, l'ensemble des voxels à l'intérieur de chaque pharmaco-organe présentant des cinétiques pharmacologiques de répartition dudit principe actif qui sont similaires.

16. Méthode de détection (400) d'au moins une structure particulière sur une image ou séquence d'images, **caractérisée en ce qu'**elle comprend les étapes suivantes :

    - une segmentation (402) de l'image ou séquence d'images destinée à la segmenter en une pluralité de régions d'intérêt ; la segmentation de l'image ou séquence d'images étant le résultat de l'exécution d'une méthode de segmentation d'une image ou séquence d'images tridimensionnelles d'un objet selon l'une quelconque des revendications 1 à 15 ;
    - un calcul (404) d'une pluralité de critères pour discriminer les structures particulières à détecter pour chaque région d'intérêt ;
    - un calcul (406) d'une fonction d'identification dépendant de la pluralité de critères pour chaque région d'intérêt, la fonction d'identification étant une fonction paramétrique dépendant d'un jeu de paramètres ;

    et **en ce que** la pluralité de critères comprend un critère de forme des régions d'intérêt afin de discriminer les structures particulières parmi les régions d'intérêt.

17. Méthode de détection d'une structure particulière selon la revendication 16, **caractérisée en ce que** la segmentation de l'image ou séquence d'images en une pluralité de régions d'intérêt est le résultat de l'exécution d'une méthode de segmentation d'une image ou séquence d'images tridimensionnelles d'un objet selon la revendication 3.

**18.** Méthode de détection d'une structure particulière selon l'une quelconque des revendications 16 à 17, **caractérisée en ce qu'**elle comprend une étape de classement (408) des régions d'intérêt selon une probabilité d'être une structure particulière à détecter à partir du calcul de la fonction d'identification.

**19.** Dispositif informatique de segmentation (114) d'une image ou séquence d'images tridimensionnelles d'un objet afin d'obtenir une image ou séquence d'images tridimensionnelles partitionnée en des régions d'intérêt, comprenant :

- des moyens de division de l'image ou séquence d'images en une pluralité de régions ;
- des moyens de fusion hiérarchique des régions issues de la division afin d'obtenir l'image ou séquence d'images tridimensionnelles partitionnée en régions d'intérêt ;

**caractérisé en ce que** les moyens de fusion hiérarchique comprennent des moyens de fusion utilisant des critères de forme et de taille des régions pour ne pas fusionner les régions de petite taille.

**20.** Dispositif informatique de détection (110) d'au moins une structure particulière sur une image ou séquence d'images, **caractérisé en ce qu'**il comprend :

- un dispositif de segmentation (114) de l'image ou séquence d'images selon la revendication 19 destiné à la segmenter en une pluralité de régions d'intérêt ;
- des moyens de détection (118) comprenant :
- des moyens de calcul d'une pluralité de critères pour discriminer les structures particulières à détecter pour chaque région d'intérêt ; la pluralité de critères comprenant un critère de forme des régions d'intérêt afin de discriminer les structures particulières parmi les régions d'intérêt ;
- des moyens de calcul d'une fonction d'identification dépendant de la pluralité de critères pour chaque région d'intérêt, la fonction d'identification étant une fonction paramétrique dépendant d'un jeu de paramètres.

**21.** Dispositif informatique de détection (110) selon la revendication 20, **caractérisé en ce qu'**il comporte :

- des moyens (122) d'adaptation automatique d'une palette de couleurs pour une région d'intérêt de l'image ou séquence d'images désignée par un opérateur ; les moyens (122) d'adaptation automatique d'une palette de couleurs étant destinés à aider l'opérateur à établir un diagnostic ; et
- une interface homme-machine (119) comprenant des moyens d'affichage (129) destinés à afficher des informations générées par les moyens (122) d'adaptation automatique de la palette de couleurs.

**22.** Dispositif informatique de détection (110) selon l'une quelconque des revendications 20 à 21, **caractérisé en ce que** l'interface homme-machine (119) comprend des moyens (130) d'affichage des structures détectées et classées par les moyens de détection (118).

**23.** Dispositif informatique de détection (110) selon l'une quelconque des revendications 20 à 22, **caractérisé en ce qu'**il comprend des moyens de quantification (126) de paramètres diagnostics dans une structure désignée par l'opérateur, et des moyens de comparaison (128) des paramètres diagnostics entre au moins deux images ; et **en ce que** l'interface homme-machine (119) comprend des moyens d'affichage (132) des paramètres diagnostics et d'un résultat de la comparaison exécutée par les moyens de comparaison (128).

**Claims**

**1.** A method for segmenting a three-dimensional image or sequence of three-dimensional at images of an object so as to obtain a three-dimensional image or sequence of images partitioned into regions of interest comprising, in the execution order of the method, the following steps:

- a division (210) of the image or sequence of images into a plurality of regions; then
- a hierarchical merging (212) of the regions resulting from the division so as to obtain the image or sequence of three-dimensional images partitioned into regions of interest;

**characterized in that** the hierarchical merging step (212) comprises a merging step (214) using shape and size criteria for regions so as not to merge small regions.

2. The segmenting method according to claim 1, **characterized in that** the hierarchical merging step (212) also comprises a merging step (216) of the regions without criteria of shape and size of the regions intended to merge the regions into regions of interest, without distinguishing by shape or size.

3. The segmenting method according to claim 2, **characterized in that** the step (216) for merging the regions without criteria of shape and size of the regions is done after the merging step (214) using criteria of shape and size of the regions and from the image or sequence of images resulting from the execution of this merging step.

4. The segmenting method according to claim 3, **characterized in that** the hierarchical merging step (212) is a double merging also comprising a merging step (218) without criteria of shape and size of the regions from the image or sequence of images divided into regions resulting from the execution of the division step (210).

5. The segmenting method according to any one of claims 2 to 4, **characterized in that** the or each merging step (216, 218) for the regions without criteria of shape and size of the regions comprises a step for calculating a merging cost, between a region $R_1$ and a region $R_2$, defined by:

$$Cost(R_1, R_2) = H(R_1, R_2)$$

H being a function depending on variations of the signal in regions $R_1$ and $R_2$; then a merging step for the images according to a minimum merging cost rule.

6. The segmenting method according to one of claims 1-5, **characterized in that** the merging step using criteria of shape and size of the regions so as not to link the small regions comprises a step for calculating a merging cost, between a region $R_1$, and a region $R_2$, defined by:

$$Cost(R_1, R_2) = \frac{H(R_1, R_2)}{F(R_1)F(R_2)G(R_1)G(R_2)}$$

H being the function depending on the variations of the signal in regions $R_1$ and $R_2$, F and G being functions respectively dependent on the shape and size of the region; then a step for merging of the images according to a minimum linkage cost rule.

7. The segmenting method according to any of claims 1 to 6, **characterized in that** the image or sequence of images comprises a plurality of voxels and measurements for each of the voxels of a variable of the image or sequence of images, during n time intervals $n \geq 1$ and the segmentation method comprises, before the step (210) for division into regions, the following steps intended to define the number of regions separated during the division step (210):

- a calculation (204) of a local spatial variance map of said measured variable of the image or sequence of images, over time and for each voxel of the image or sequence of images; then
- an automatic extraction (206) of at least one core point of the image or sequence of images, the core points being the pixels of the minima of the local spatial variance map of said variable; the number of core points extracted during this step defining the number of regions of the image or sequence of images divided at the end of the division step (210).

8. The segmentation method according to claim 7, **characterized in that** it comprises, after the step for automatic extraction of the core points and before the division step (210), a step (208) for extracting a temporal evolution of said variable of the or each core point and an estimation of the global parameters of the noise, intended to calculate the merging cost during the hierarchical merging step (212).

9. The segmenting method according to any one of claims 7 to 8, wherein each region resulting from the step (210) for division of the image or sequence of images corresponds to a core point resulting from the step (206) for automatic extraction of the core points of the image or sequence of images and each region groups together the pixels having a similar temporal evaluation of said variable.

10. The segmenting method according to any of claims 1 to 9, **characterized in that** it comprises a step for excluding a background (202) of the image or sequence of images comprising a step for defining a threshold for the image or sequence of images intended to extract a mask of the object from an image acquired in transmission of the object so as to apply the segmentation method only to the object.

11. The segmenting method according to claim 10, **characterized in that** the exclusion step (202) of the background comprises a smoothing step to maximize a contrast of the image in the small regions of interest before the step for defining a threshold.

12. The segmenting method according to any of claims 1 to 11, **characterized in that** said image or sequence of images is acquired beforehand by an imaging device according to the positron emission tomography technique.

13. The segmenting method according to any of claims 1to 12, **characterized in that** the image or sequence of images of an object is an image or sequence of images of an entire body, said segmentation method segmenting the body according to a partition into pharmaco-organs.

14. The segmenting method according to claim 13, **characterized in that** the body is animated by physiological movements either of the periodic type, the period of which is reduced in comparison with the acquisition duration of the image or each of the images of the sequence, or of the non-periodic type.

15. The segmenting method according to any one of claims 13 to 14, **characterized in that** said variable represents the radioactive concentration at a given moment of at least one active ingredient marked and injected into the body, the set of voxels inside each pharmaco-organ having pharmacological kinetics for distribution of said active ingredient that are similar.

16. A method (400) for detecting at least one particular structure over an image or sequence of images, **characterized in that** it comprises the following steps:

   - segmentation (402) of the image or sequence of images intended to segment it into a plurality of regions of interest; the segmentation of the image or sequence of images being the result of the execution of a method for segmenting a three-dimensional image or sequence of three-dimensional images of an object according to any one of claims 1 to 15;
   - a calculation (404) of a plurality of criteria to discriminate the particular structures to be detected for each region of interest;
   - a calculation (406) of an identification function depending on the plurality of criteria for each region of interest, the identification function being a parametric function depending on a set of parameters;

   and **in that** the plurality of criteria comprises a criterion of shape of the regions of interest so as to discriminate the particular structures among the regions of interest.

17. The method for detecting a particular structure according to claim 16, **characterized in that** the segmentation of the image or sequence of images into a plurality of regions of interest is the result of the execution of a method for segmenting an image or sequence of three-dimensional images of an object according to claim 3.

18. The method for detecting a particular structure according to any one of claims 16 to 17, **characterized in that** it comprises a step (408) for classifying regions of interest according to a probability of being a particular structure to be detected from the calculation of the identification function.

19. A computer device (114) for segmenting a three-dimensional image or sequence of images of an object in order to get a three-dimensional image or sequences of images partitioned into regions of interest comprising:

   - a means for divining the image or sequence of images into a plurality of regions;
   - a means for hierarchical merging of the regions resulting from the division so as to obtain the three-dimensional image or sequence of images partitioned into regions of interest;

   **characterized in that** the hierarchical merging means comprises a merging means using criteria of shape and size of the regions so as not to merge the small regions.

**20.** A computer device (110) for detecting at least one particular structure on an image or sequence of images, **characterized in that** it comprises:

- a device (114) for segmenting the image or sequence of images according to claim 19 intended to segment it into a plurality of regions of interest;
- a detection means (118) comprising:

- a means for calculating a plurality of criteria to discriminate the particular structures to be detected for each region of interest; the plurality of criteria comprising a criteria of shape of the regions of interest so as to discriminate the particular structures among the regions of interest;
- a means for calculating an identification function depending on the plurality of criteria for each region of interest, the identification function being a parametric function depending on a set of parameters.

**21.** The computer detection device (110) according to claim 20, **characterized in that** it includes:

- a means (122) for automatic adaptation of a color palette for a region of interest of the image or sequence of images designated by an operator: the means (112) for automatic adaptation of a color palette being intended to help the operator establish a diagnosis; and
- a man-machine interface (119) comprising a display means (129) intended to display information generated by the automatic adaptation means (122) of the color palette.

**22.** The computer detection device (110) according to any one of claims 20 to 21, **characterized in that** the man-machine interface (119) comprises a display means (130) for displaying structures detected and classified by the detection means (118).

**23.** The detection device (110) according to any one of claims 20 to 22, **characterized in that** it comprises a quantification means (126) for diagnostic parameters in a structure designated by the operator, and a comparison means (128) for comparing the diagnostic parameters between at least two images, and the man-machine interface (119) comprises a display means (132) for displaying diagnostic parameters and a result of the comparison done by the comparison means (128).


**Patentansprüche**

**1.** Verfahren zur Aufteilung eines Bildes oder einer Folge dreidimensionaler Bilder eines Objektes, um ein Bild oder eine Folge dreidimenslonafer Bilder zu erhalten, die in interessierende Bereiche aufgeteilt sind, in der Reihenfolge der Ausführung des Verfahrens die folgenden Schritte umfassend,

- Unterteilung (210) des Bildes oder der Folge von Bildern in mehrere Bereiche, und dann
- hierarchische Erschmelzung (212) der Bereiche, die aus der Unterteilung (210) hervorgegangen sind, um das Bild oder die Folge dreidimensionaler Bilder in interessierende Bereiche aufgeteilt zu erhalten,

**dadurch gekennzeichnet, dass** der Schritt der hierarchischen Verschmelzung (212) einen Verschmelzungsschritt (214) umfasst, der Form und Größe der Bereiche betreffende Kriterien anwendet, um die Bereiche geringer Größe nicht zu verschmelzen.

**2.** Aufteilungsverfahren nach Patentanspruch 1, **dadurch gekennzeichnet, dass** der Schritt der hierarchischen Verschmelzung (212) außerdem einen Verschmelzungsschritt der Bereiche ohne Form und Größe der Bereiche betreffende Kriterien (216) umfasst, der dazu bestimmt ist die Bereiche ohne Unterscheidung von Form oder Größe zu interessierenden Bereichen zu verschmelzen.

**3.** Aufteilungsverfahren nach Patentanspruch 2. **dadurch gekennzeichnet, dass** der Schritt der Verschmelzung der Bereiche ohne Form und Große der Bereiche betreffende Kriterien (216) nach dem Verschmelzungsschritt (214), der Form und Größe der Bereiche betreffende Kriterien anwendet, ausgeführt wird und ausgehend vom Bild oder von der Folge von Bildern, das aus der Ausführung dieses Verschmelzungsschrittes (214) hervorgeht.

**4.** Aufteilungsverfahren nach Patentanspruch 3, **dadurch gekennzeichnet, dass** der Schritt der hierarchischen Verschmelzung (212) eine doppelte Verschmelzung ist, die außerdem einen Schritt der Verschmelzung (218) ohne Kriterien der Form und Größe der Bereiche ausgehend vom in Bereiche unterteilten Bild oder der Folge von Bildern umfasst, das aus der Ausführung des Unterteilungsschrittes (210) hervorgeht.

5. Aufteilungsverfahren nach irgendeinem der Patentansprüche 2 bis 4, **dadurch gekennzeichnet, dass** der oder jeder Verschmelzungsschritt (216, 218) der Bereiche ohne Form und Größe der Bereiche betreffende Kriterien einen Schritt zur Berechnung eines Verschmelzungspreises eines Bereiches $R_1$ und eines Bereiches $R_2$, umfasst, der durch

$$Preis(R_1, R_2) = H(R_1, R_2)$$

definiert wird, worin H eine Funktion ist, die von den Änderungen des Signals in den Bereichen $R_1$ und $R_2$ abhängt, und dann einen Schritt der Verschmelzung der Bilder nach einer Regel des minimalen Verschmelzungspreises.

6. Aufteilungsverfahren nach irgendeinem der Patentansprüche 1 bis 5, **dadurch gekennzeichnet, dass** der Verschmelzungsschritt (214). der Form und Größe der Bereiche betreffende Kriterien anwendet, um nicht Bereiche geringer Größe zu verschmelzen, einen Schritt der Berechnung eines Verschmelzungspreises eines Bereichs $R_1$ und eines Bereichs $R_2$ umfasst, der durch

$$Preis(R_1, R_2) = \frac{H(R_1, R_2)}{F(R_1)F(R_2)G(R_1)G(R_2)}$$

definiert wird, worin H die Funktion ist, die von den Änderungen des Signals in den Bereichen $R_1$ und $R_2$ abhängt, und F und G Funktionen sind, die von der Form bzw der Größe des Bereichs abhängen, und dann einen Schritt der Verschmelzung der Bilder nach einer Regel des minimalen Verschmelzungspreises.

7. Aufteilungsverfahren nach irgendeinem der Patentansprüche 1 bis 6, **dadurch gekennzeichnet, dass** das Bild oder die Folge von Bildern eine Vielzahl von Voxeln umfasst und für jedes Voxel Werte einer Variablen des Bildes oder der Folge von Bildern im Verlauf von n Zeitintervallen ($n \geq 1$), und dadurch, dass das Aufteilungsverfahren vor dem Schritt der Unterteilung (210) in Bereiche die folgenden Schritte umfasst, die dazu dienen, die Anzahl der im Verlauf des Unterteilungsschrittes (210) abgeteilten Bereiche zu bestimmen:

- Berechnung (204) einer Karte der lokalen räumlichen Varianz der genannten gemessenen Variablen des Bildes oder der Folge von Bildern im zeitlichen Verlauf und für jedes Voxel des Bildes oder der Folge von Bildern, und dann
- automatische Gewinnung (206) mindestens eines HerzpunKtes des Bildes oder der Folge von Bildern, wobei Herzpunkte die Pixel der Minima der Karte der lokalen räumlichen Varianz der genannten Variablen sind, wobei die Anzahl der im Verlauf dieses Schrittes gewonnenen Herzpunkte die Anzahl an abgeteilten Bereichen des Bildes oder der Folge von Bildern am Ende des Unterteilungsschrittes (210) definiert.

8. Aufteilungsverfahren nach Patentanspruch 7, **dadurch gekennzeichnet, dass** es nach dem Schritt zur automatischen Gewinnung (206) der Herzpunkte und vor dem Unterteilungsschritt (210) einen Schritt zur Gewinnung (208) einer zeitlichen Entwicklung der genannten Variablen des oder jedes Herzpunktes und eine Abschätzung der globalen Rauschparameter umfasst die zur Berechnung des Verschmelzungspreises im Schritt der hierarchischen Verschmelzung (212) dient.

9. Aufteilungsverfahren nach irgendeinem der Patentansprüche 7 bis 8, **dadurch gekennzeichnet, dass** jeder aus dem Schritt der Unterteilung (210) des Bildes oder der Folge von Bildern hervorgegangene Bereich einem Herzpunkt entspricht, der aus dem Schritt der automatischen Gewinnung (206) der Herzpunkte des Bildes oder der Folge von Bildern hervorgegangen ist, und jeder Bereich die Pixel gruppiert, die eine ähnliche zeitliche Entwicklung der genannten Variablen aufweisen.

10. Aufteilungsverfahren nach irgendeinem der Patentansprüche 1 bis 9, **dadurch gekennzeichnet, dass** es einen Schritt zum Ausschluss eines Hintergrundes (202) des Bildes oder der Folge von Bildern umfasst, einen Schritt der Definition eines Schwellenwertes des Bildes oder der Folge von Bildern umfassend, der dazu dient, eine Maske des Objektes aufgrund eines im Durchlicht vom Objekt erfassten Bildes zu gewinnen, um das Aufteilungsverfahren allein auf das Objekt anzuwenden.

**11.** Aufteilungsverfahren nach Patentanspruch 10, **dadurch gekennzeichnet, dass** der Hintergrundausschlussschritt (202) einen Glättschritt umfasst, um vor dem Schritt der Schwellenwertdefinition den Kontrast des Bildes in den interessierenden Bereichen geringer Größe zu maximieren.

**12.** Aufteilungsverfahren nach irgendeinem der Patentansprüche 1 bis 11, **dadurch gekennzeichnet, dass** das genannte Bild oder die Folge von Bildern vorab in einer bildgebenden Vorrichtung nach der Technik der Positronenemissionstomographie gewonnen wurde

**13.** Aufteilungsverfahren nach irgendeinem der Patentansprüche 1 bis 12, **dadurch gekennzeichnet, dass** das genannte Bild oder Folge von Bildern ein Bild oder eine Folge von Bildern eines ganzen Organismus ist, wobei das genannte Aufteilungsverfahren den Organismus nach einer Einteilung in Pharmako-Organe aufteilt.

**14.** Aufteilungsverfahren nach Patentanspruch 13, **dadurch gekennzeichnet, dass** der Organismus physiologische Bewegungen ausführt, entweder periodische, deren Periode im Vergleich zur Dauer der Gewinnung des Bildes oder jedes der Bilder der Folge gering ist, oder nicht-periodische.

**15.** Aufteilungsverfahren nach einem der Patentansprüche 13 bis 14, **dadurch gekennzeichnet, dass** die genannte Variable die Radioaktivitätskonzentration zu einem gegebenen Zeitpunkt mindestens einer aktiven Substanz angibt, die markiert und in den Organismus injiziert wurde, wobei die Gesamtheit der Voxel im Inneren jedes Pharmako-Organs die pharmakologischen Kinetiken der Verteilung der genannten aktiven Substanz sind, die ahnlich sind.

**16.** Verfahren zur Feststellung (400) mindestens einer besonderen Struktur in einem Bild oder einer Folge von Bildern, **dadurch gekennzeichnet, dass** es die folgenden Schritte umfasst:

- Aufteilung (402) des Bildes oder der Folge von Bildern, dazu bestimmt, es in mehrere interessierende Bereiche aufzuteilen, wobei die Aufteilung des Bildes oder der Folge von Bildern das Ergebnis der Ausführung eines Verfahrens zur Aufteilung eines Bildes oder einer Folge dreidimensionaler Bilder eines Objektes nach irgendeinem der Patentansprüche 1 bis 15 ist
- Berechnung (404) mehrerer Kriterien zur Unterscheidung der festzustollenden besonderen Strukturen für jeden interessierenden Bereich,
- Berechnung (406) einer Identifizierungsfunktion in Abhängigkeit von den mehreren Kriterien für jeden interessierenden Bereich, wobei die Identifizierungsfunktion eine Parameterfunktion ist, die von einem Satz von Parametern abhängig ist,

und dadurch, dass die mehreren Kriterien ein Kriterium der Form der interessierenden Bereiche umfasst, um die besonderen Strukturen unter den interessierenden Bereichen zu unterscheiden.

**17.** Verfahren zur Feststellung einer besonderen Struktur nach Patentanspruch 16, **dadurch gekennzeichnet, dass** die Aufteilung des Bildes oder der Folge von Bildern in mehrere interessierende Bereiche das Ergebnis der Ausführung eines Verfahrens zur Aufteilung eines Bildes oder einer Folge dreidimensionaler Bilder eines Objektes nach Patentanspruch 3 ist.

**18.** Verfahren zur Feststellung einer besonderen Struktur nach irgendeinem der Patentansprüche 16 bis 17, **dadurch gekennzeichnet, dass** es einen Schritt der Klassifizierung (408) der interessierenden Bereiche, ausgehend von der Berechnung der Identifizierungsfunktion, nach der Wahrscheinlichkeit umfasst, eine festzustellende besondere Struktur zu sein.

**19.** Datenverarbeitungsvorrichtung zur Aufteilung (114) eines Bildes oder einer Folge dreidimensionaler Bilder eines Objektes, um ein Bild oder eine Folge dreidimensionaler Bilder zu erhalten, das in interessierende Bereiche aufgeteilt ist, umfassend:

- Mittel zur Unterteilung des Bildes oder der Folge von Bildern in eine Vielzahl von Bereichen,
- Mittel zur hierarchischen Verschmelzung der Bereiche, die aus der Unterteilung hervorgegangen sind, um das Bild oder die Folge dreidimensionaler Bilder, die in interessierende Bereiche aufgeteilt sind, zu erhalten,

**dadurch gekennzeichnet, dass** die Mittel zur hierarchischen Verschmelzung Kriterien anwenden, die Form und Größe der Bereiche betreffen, um die Bereiche geringer Größe nicht zu verschmelzen.

20. Datenverarbeitungsvorrichtung zur Feststellung (110) mindestens einer besonderen Struktur in einem Bild oder einer Folge von Bildern, **dadurch gekennzeichnet, dass** sie umfasst:

- eine Vorrichtung zur Aufteilung (114) des Bildes oder der Folge von Bildern nach Patentanspruch 19, dazu bestimmt, es in mehrere interessierende Bereiche aufzuteilen,
- Feststellungsmittel (118), umfassend:
- Mittel zur Berechnung mehrerer Kriterien zur Unterscheidung der festzustellenden besonderen Strukturen für jeden interessierenden Bereich, wobei die mehreren Kriterien ein Kriterium der Form der Interessierenden Bereiche umfassen, um unter den interessierenden Bereichen die besonderen Strukturen zu unterscheiden.
- Mittel zur Berechnung einer Identifizierungsfunktion in Abhängigkeit von den mehreren Kriterien für jeden interessierenden Bereich, wobei die identifizierungsfunktion eine Parameterfunktion ist, die von einem Satz von Parametern abhängig ist.

21. Feststellungsdatenverarbeitungsvorrichtung (110) nach Patentanspruch 20, **dadurch gekennzeichnet, dass** sie umfasst:

- Mittel (122) zur automatischen Anpassung einer Farbpalette an einen interessierenden Bereich des Bildes oder der Folge von Bildern, den der Benutzer bezeichnet hat, wobei die Mittel (122) zur automatischen Anpassung einer Farbpalette dazu bestimmt sind, den Benutzer bei einer Diagnosestellung zu unterstützen, und
- eine Mensch-Maschinen-Schnittstelle (119), Anzeigemittel (129) umfassend, die dazu bestimmt sind, Informationen anzuzeigen, die von den Mitteln (122) zur automatischen Anpassung der Farbpalette erzeugt wurden.

22. Feststellungsdatenverarbeitungsvorrichtung (110) nach irgendeinem der Patentansprüche 20 bis 21, **dadurch gekennzeichnet, dass** die Mensch-Maschinen-Schnittstelle (119) Mittel (130) zur Anzeige der von den Feststellungsmitteln (118) festgestellten und klassifizierten Strukturen umfasst.

23. Feststellungsdatenverarbeitungsvorrichtung (110) nach irgendeinem der Patentansprüche 20 bis 22, **dadurch gekennzeichnet, dass** sie Mitte! zur Quantifizierung (126) von Diagnoseparametern in einer vom Benutzer bezeichneten Struktur umfasst, und Mittel zum Vergleich (128) der Diagnoseparameter zwischen mindestens zwei Bildern, und dadurch, dass die Mensch-Maschinen-Schnittstelle (119) Mittel zur Anzeige (132) der Diagnoseparameter und eines Ergebnisses des Vergleichs umfasst, den die Vergleichsmittel (128) ausgeführt haben.

FIG.1

200

Acquisition d'une image ou séquence

Exclusion du fond des images — 202

Calcul d'une carte de variance spatiale locale du signal — 204

Identification des minima de la carte = points de coeur — 206

Estimation de l'évolution temporelle de la variable + estimation du bruit — 208

Division en régions par minimisation de l'énergie entre un point de coeur et un voxel — 210

212

Fusion hiérarchique

Fusion sans critères de forme et taille — 218

Fusion avec critères de taille et forme — 214

Fusion sans critères de forme et taille — 216

# FIG.2

109     202-A     204-A     206-A

208-A     210-A     212-A

FIG.3

400

402

| Segmentation des images |

404

| – Choix des critères<br>– Calcul des critères pour chaque région |

406

| Calcul de la fonction d'identification |

408

| Classement des régions |

409

| Apprentissage |

410

| Identification de la structure à détecter |

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2886433

**Littérature non-brevet citée dans la description**

- Case study: an evaluation of user-assisted hierarchical watershed segmentation. **J. E. CATES et al.** Medical Image Analysis. Oxford University Press, 01 Décembre 2005, vol. 9, 566-578